# EUROPEAN PATENT APPLICATION

(11) **EP 4 322 634 A1**
(43) Date of publication of application: **14.02.2024**
(21) Application number: 22190018.6
(22) Date of filing: 11.08.2022
(51) Int. Cl.: H04W 64/00, H04W 4/02, H04W 8/00, H04W 8/24, H04W 8/20, H04W 76/15, H04L 67/51, H04L 41/50

(54) **METHOD AND APPARATUS FOR DETERMINING A POSITION OF A TERMINAL DEVICE**

(71) Applicant: Robert Bosch GmbH, 70442 Stuttgart (DE)
(72) Inventor: Hassan, Khaled Shawky, 30880 Laatzen (DE); Stark, Maximilian, 20249 Hamburg (DE)

(57) **Abstract**

A method, for example a computer-implemented method, comprising: determining, by a network device, a position of a first terminal device, determining, by the network device, a position of a second terminal device, and initiating, by the network device, at least one sidelink-based positioning procedure associated with at least one of the first terminal device and the second terminal device.

## Description

### Technical Field

The disclosure relates to a method of determining, by a network device, a position of a terminal device.

The disclosure further relates to an apparatus for determining, by a network device, a position of a terminal device.

### Summary

Exemplary embodiments relate to a method, for example a computer-implemented method, comprising: determining, by a network device, a position of a first terminal device, determining, by the network device, a position of a second terminal device, and initiating, by the network device, at least one sidelink (SL)-based positioning procedure associated with at least one of the first terminal device and the second terminal device.

In some exemplary embodiments, the at least one sidelink-based positioning procedure may be used to verify and/or to refine the position information related to the position of the first terminal device and/or the position information related to the position of the second terminal device.

In some exemplary embodiments, the network device is a base station, e.g. for a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the network device may e.g. be a gNB.

In some exemplary embodiments, the first terminal device and/or the second terminal device can e.g. be used with a wireless, for example cellular, communications system, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the first terminal device and/or the second terminal device may be a user equipment (UE) or a data transceiver modem, which, for example, may be associated with a mobile object such as e.g. a vehicle, for example car or truck or the like.

In some exemplary embodiments, the first terminal device and/or the second terminal device may be at least one of: an loT (Internet of Things) device, an infrastructure component or part of an infrastructure component (e.g., traffic lights, street lights, traffic sign, toll gate), an industrial automation component, e.g. IIoT (Industrial loT) component or infrastructure (e.g., robots, machines, etc.), a device for a mobile broadband user, and/or a vehicle.

In some exemplary embodiments, at least one of the first terminal device and the second terminal device is, e.g. currently, served by the network device, e.g. gNB.

In some exemplary embodiments, at least one of a) determining the position of the first terminal device, b) determining the position of the second terminal device, comprises at least one of: A) performing a positioning procedure, for example based on an air interface, e.g. Uu interface, between the network device and at least one of the first terminal device and the second terminal device, B) receiving at least one of the position of the first terminal device and the position of the second terminal device, e.g. from a further entity, wherein for example at least one of a) determining the position of the first terminal device, b) determining the position of the second terminal device uses another positioning procedure than a sidelink-based positioning procedure associated with at least one of the first terminal device and the second terminal device.

In some exemplary embodiments, the Uu-based positioning procedure may e.g. employ positioning reference signals, PRS, according to some accepted standard, and/or supported positioning techniques according to some accepted standard.

In some exemplary embodiments, the at least one sidelink-based positioning procedure may e.g. employ sidelink positioning reference signals associated with a sidelink interface, e.g. enabling, for example direct, terminal device-to-terminal device communication. In some exemplary embodiments, the sidelink interface may e.g. be a PC5 interface according to some accepted standard.

In some exemplary embodiments, the method comprises evaluating, by the network device, at least one of the position of the first terminal device and the position of the second terminal device with respect to a result of the at least one sidelink-based positioning procedure, wherein for example the evaluating comprises verifying at least one of the position of the first terminal device and the position of the second terminal device based on the result of the at least one sidelink-based positioning procedure. In other words, in some exemplary embodiments, the at least one sidelink-based positioning procedure may e.g. be used to verify, e.g. check a precision or accurateness, or at least plausibility, of the position of the first terminal device and/or of the position of the second terminal device as e.g. obtained by another, e.g. non-sidelink-based, positioning procedure.

In some exemplary embodiments, the method comprises at least one of: a) transmitting, by the network device, a request instructing to perform at least one sidelink-based positioning procedure associated with at least one of the first terminal device and the second terminal device to at least one of the first terminal device and the second terminal device, b) receiving, by the network device, a response to the request from at least one of the first terminal device and the second terminal device, wherein for example the response to the request characterizes an acknowledgement of at least one of the first terminal device and the second terminal device indicating b1) that the respective terminal device is capable of performing the at least one sidelink-based positioning procedure and/or b2) that the first terminal device and the second terminal device are configured to, e.g. able to, communicate directly with each other, e.g. over a sidelink interface, e.g. a PC5 interface according to some accepted standard.

In some exemplary embodiments, the method comprises at least one of: a) receiving, by the network device, a response to the request from the first terminal device, wherein for example the response characterizes an acknowledgement of the first terminal device indicating that a1) the first terminal device is capable of performing the at least one sidelink-based positioning procedure and/or that a2) the first terminal device is configured to, e.g. able to, communicate directly with the second terminal device, e.g. over a sidelink interface, e.g. a PC5 interface according to some accepted standard, b) receiving, by the network device, a response to the request from the second terminal device, wherein for example the response characterizes an acknowledgement of the second terminal device indicating that b1) the second terminal device is capable of performing the at least one sidelink-based positioning procedure and/or that b2) the second terminal device is configured to, e.g. able to, communicate directly with the first terminal device, e.g. over a sidelink interface, e.g. a PC5 interface according to some accepted standard.

Further exemplary embodiments relate to an apparatus, for example for a network device, for performing the method according to the embodiments, e.g. as defined by at least one of the claims 1 to 5.

Further exemplary embodiments relate to an apparatus, for example for a network device, comprising means for performing the method according to the embodiments, e.g. as defined by at least one of the claims 1 to 5.

Further exemplary embodiments relate to a method, for example a computer-implemented method, comprising: receiving, by a terminal device, a request instructing the terminal device to perform at least one sidelink-based positioning procedure associated with at least one further terminal device. In some exemplary embodiments, the terminal device may e.g. be the first terminal device and/or the second terminal device as exemplarily mentioned above.

In some exemplary embodiments, the method comprises: transmitting, by the terminal device, a response to the request, wherein for example the response to the request characterizes an acknowledgement of the terminal device indicating at least one of a) that the terminal device is capable of performing the at least one sidelink-based positioning procedure, b) that the terminal device is configured to, e.g. able to, communicate directly with another terminal device, e.g. over a sidelink interface, e.g. a PC5 interface according to some accepted standard.

In some exemplary embodiments, the method comprises at least one of: a) performing, by the terminal device, the at least one sidelink-based positioning procedure associated with at least one further terminal device in a first configuration, wherein for example the terminal device assumes a role of a target terminal device, wherein for example at least one further terminal device assumes a role of an anchor terminal device, b) performing, by the terminal device, the at least one sidelink-based positioning procedure associated with at least one further terminal device in a second configuration, wherein for example the terminal device assumes a role of an anchor terminal device, wherein for example at least one further terminal device assumes a role of a target terminal device.

In some exemplary embodiments, the method comprises: transmitting, by the terminal device, a result of the at least one sidelink-based positioning procedure, e.g. to the network device, wherein for example the transmitting comprises at least one of a) transmitting, by the terminal device, a result of the at least one sidelink-based positioning procedure associated with a or the first configuration, e.g. to the network device, b) transmitting, by the terminal device, a result of the at least one sidelink-based positioning procedure associated with a or the second configuration, e.g. to the network device.

In some exemplary embodiments, the method comprises at least one of: a) assuming, for example at least temporarily, a first role, by the terminal device, e.g. for the at least one sidelink-based positioning procedure, wherein the first role is associated with a target terminal device, b) assuming, for example at least temporarily, a second role, by the terminal device, , e.g. for the at least one sidelink-based positioning procedure, wherein the second role is associated with an anchor terminal device.

Further exemplary embodiments relate to an apparatus, for example for a terminal device, for performing the method according to the embodiments, e.g. as defined by at least one of the claims 8 to 12.

Further exemplary embodiments relate to an apparatus, for example for a terminal device, comprising means for performing the method according to the embodiments, e.g. as defined by at least one of the claims 8 to 12.

Further exemplary embodiments relate to a wireless, for example cellular, communication system comprising at least one apparatus according to the embodiments.

Further exemplary embodiments relate to a computer program comprising instructions which, when the program is executed by a computer, cause the computer to carry out the method according to the embodiments.

Further exemplary embodiments relate to a computer-readable storage medium comprising instructions which, when executed by a computer, cause the computer to carry out the method according to the embodiments.

Further exemplary embodiments relate to a data carrier signal carrying and/or characterizing the computer program according to the embodiments.

Further exemplary embodiments relate to a use of the method according to the embodiments and/or of the apparatus according to the embodiments and/or of the communication system according to the embodiments and/or of a computer program comprising instructions which, when the program is executed by a computer, cause the computer to carry out the method according to the embodiments, and/or of a computer-readable storage medium comprising instructions which, when executed by a computer, cause the computer to carry out the method according to the embodiments and/or of a data carrier signal carrying and/or characterizing a computer program comprising instructions which, when the program is executed by a computer, cause the computer to carry out the method according to the embodiments for at least one of: a) performing at least one sidelink-based positioning procedure, b) assisting a network device in performing at least one positioning procedure, c) validating at least one positioning procedure associated with a network device, e.g. based on the at least one sidelink-based positioning procedure, d) increasing a precision of at least one positioning procedure associated with a network device, e.g. based on the at least one sidelink-based positioning procedure, e) performing hybrid positioning associated with at least one network device and at least one terminal device, f) employing sidelink ranging capabilities of at least one terminal device, e.g. for positioning, g) increasing a flexibility of hybrid positioning associated with at least one network device and at least one terminal device, h) performing on-demand sidelink-based positioning, e.g. upon request of at least one network device, e.g. for verifying the position of the first terminal device and/or the position of the second terminal device, i) providing positioning capabilities to communications networks, e.g. associated with car-to-car communication and/or communication of Industrial Internet of Things, lIoT, device and/or vehicle-to-X, V2X, communication, j) assigning, for example dynamically, e.g. during operation, assigning, different roles associated with the at least one sidelink-based positioning procedure to at least one of the first terminal device and the second terminal device, k) collision warning associated with at least one mobile object, e.g. mobile terminal device, I) collision avoidance associated with at least one mobile object, e.g. mobile terminal device, m) collision prevention associated with at least one mobile object, e.g. mobile terminal device, n) modifying a movement, e.g. trajectory, of at least one mobile object, e.g. mobile terminal device.

### Brief Description of Exemplary Figures

Some exemplary embodiments will now be described with reference to the accompanying drawings, in which:
- Fig. 1: schematically depicts a simplified flow-chart according to exemplary embodiments,
- Fig. 2: schematically depicts a simplified block diagram according to exemplary embodiments,
- Fig. 3: schematically depicts a simplified flow-chart according to exemplary embodiments,
- Fig. 4: schematically depicts a simplified flow-chart according to exemplary embodiments,
- Fig. 5: schematically depicts a simplified flow-chart according to exemplary embodiments,
- Fig. 6: schematically depicts a simplified flow-chart according to exemplary embodiments,
- Fig. 7: schematically depicts a simplified flow-chart according to exemplary embodiments,
- Fig. 8: schematically depicts a simplified flow-chart according to exemplary embodiments,
- Fig. 9: schematically depicts a simplified block diagram according to exemplary embodiments,
- Fig. 10: schematically depicts a simplified scenario according to exemplary embodiments,
- Fig. 11: schematically depicts a simplified signaling diagram according to exemplary embodiments,
- Fig. 12: schematically depicts aspects of use according to exemplary embodiments.

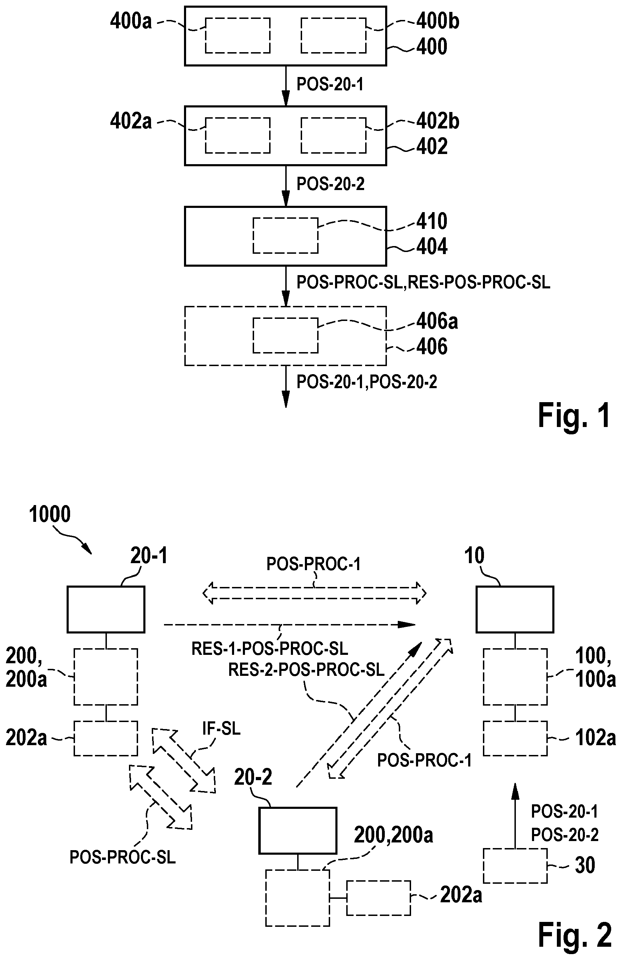

Exemplary embodiments, Fig. 1, 2, relate to a method, for example a computer-implemented method, comprising: determining 400, by a network device 10 (Fig. 2), a position POS-20-1 of a first terminal device 20-1 (Fig. 2), determining 402 (Fig. 1), by the network device 10, a position POS-20-2 of a second terminal device 20-2, and initiating 404, by the network device 10, at least one sidelink-based positioning procedure POS-PROC-SL associated with (e.g., using) at least one of the first terminal device 20-1 and the second terminal device 20-1.

In some exemplary embodiments, the at least one sidelink-based positioning procedure POS-PROC-SL may be used to verify and/or to refine the position information related to the position POS-20-1 of the first terminal device 20-1 and/or the position information related to the position POS-20-2 of the second terminal device 20-2.

In some exemplary embodiments, Fig. 2, the network device 10 is a base station, e.g. for a wireless, for example cellular, communications system or network 1000, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the network device 10 may e.g. be a gNB.

In some exemplary embodiments, Fig. 2, the first terminal device 20-1 and/or the second terminal device 20-2 can e.g. be used with a wireless, for example cellular, communications system or network 1000, which is for example based on and/or adheres at least partially to at least one third generation partnership project, 3GPP, radio standard such as 4G (fourth generation), 5G (fifth generation), 6G (sixth generation) or other radio access technology.

In some exemplary embodiments, the first terminal device 20-1 and/or the second terminal device 20-2 may be a user equipment (UE) or a data transceiver modem, which, for example, may be associated with a mobile object such as e.g. a vehicle, for example car or truck or the like.

In some exemplary embodiments, Fig. 2, the first terminal device 20-1 and/or the second terminal device 20-2 may be at least one of: an loT (Internet of Things) device, an infrastructure component or part of an infrastructure component (e.g., traffic lights, street lights, traffic sign, toll gate), an industrial automation component, e.g. lIoT (Industrial loT) component or infrastructure (e.g., robots, machines, etc.), a device for a mobile broadband user, and/or a vehicle.

In some exemplary embodiments, at least one of the first terminal device 20-1 and the second terminal device 20-2 is, e.g. currently, served by the network device, e.g. gNB 10.

In some exemplary embodiments, Fig. 1, at least one of a) determining 400 the position POS-20-1 of the first terminal device 20-1, b) determining 402 the position POS-20-2 of the second terminal device 20-2, comprises at least one of: A) performing 400a, 402a a positioning procedure, for example based on an air interface, e.g. Uu interface, between the network device 10 (Fig. 2) and at least one of the first terminal device 20-1 and the second terminal device 20-2, B) receiving 400b, 402b at least one of the position POS-20-1 of the first terminal device 20-1 and the position POS-20-2 of the second terminal device 20-2, e.g. from a further entity 30 (Fig. 2), wherein for example at least one of a) determining 400 the position of the first terminal device, b) determining 402 the position of the second terminal device uses another positioning procedure than a sidelink-based positioning procedure POS-PROC-SL associated with at least one of the first terminal device 20-1 and the second terminal device 20-2, e.g. a non-sidelink based positioning procedure.

In some exemplary embodiments, the Uu-based positioning procedure may e.g. employ positioning reference signals, PRS, according to some accepted standard, and/or supported positioning techniques according to some accepted standard.

In some exemplary embodiments, Fig. 2, the at least one sidelink-based positioning procedure POS-PROC-SL may e.g. employ sidelink positioning reference signals associated with a sidelink interface IF-SL, e.g. enabling, for example direct, terminal device-to-terminal device communication. In some exemplary embodiments, the sidelink interface IF-SL may e.g. be a PC5 interface according to some accepted standard.

In some exemplary embodiments, Fig. 1, the method comprises evaluating 406, by the network device 10, at least one of the position POS-20-1 of the first terminal device 20-1 and the position POS-20-2 of the second terminal device 20-2 with respect to a result RES-POS-PROC-SL of the at least one sidelink-based positioning procedure POS-PROC-SL, wherein for example the evaluating 406 comprises verifying 406a at least one of the position POS-20-1 of the first terminal device 20-1 and the position POS-20-2 of the second terminal device 20-2 based on the result RES-POS-PROC-SL of the at least one sidelink-based positioning procedure. In other words, in some exemplary embodiments, the at least one sidelink-based positioning procedure may e.g. be used to verify 406, e.g. check, a precision or accurateness, or at least plausibility, of the position POS-20-1 of the first terminal device and/or of the position POS-20-2 of the second terminal device as e.g. obtained by another, e.g. non-sidelink-based, positioning procedure 400, 402.

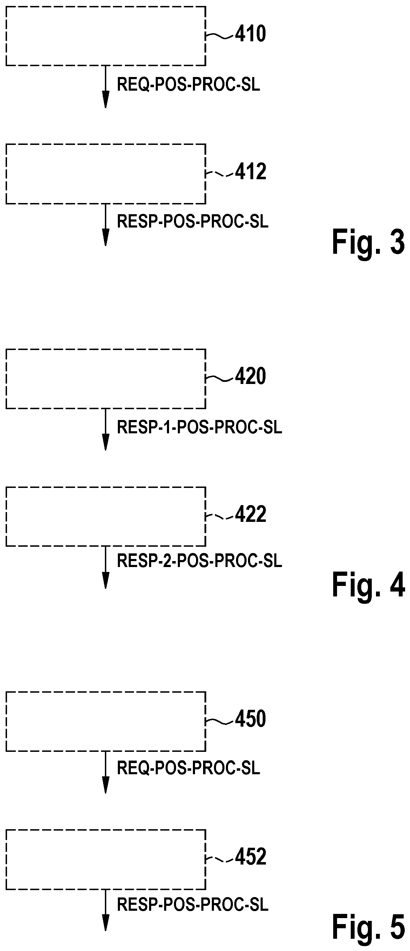

In some exemplary embodiments, Fig. 3, the method comprises at least one of: a) transmitting 410, by the network device 10, a request REQ-POS-PROC-SL instructing to perform at least one sidelink-based positioning procedure associated with at least one of the first terminal device 20-1 and the second terminal device 20-2 to at least one of the first terminal device 20-1 and the second terminal device 20-2, b) receiving 412, by the network device 10, a response RESP-POS-PROC-SL to the request REQ-POS-PROC-SL from at least one of the first terminal device 20-1 and the second terminal device 20-2, wherein for example the response RESP-POS-PROC-SL to the request REQ-POS-PROC-SL characterizes an acknowledgement of at least one of the first terminal device 20-1 and the second terminal device 20-2 indicating b1) that the respective terminal device 20-1, 20-2 is capable of performing the at least one sidelink-based positioning procedure and/or b2) that the first terminal device 20-1 and the second terminal device 20-2 are configured to, e.g. able to, communicate directly with each other, e.g. over a sidelink interface IF-SL, e.g. a PC5 interface according to some accepted standard.

In some exemplary embodiments, Fig. 4, the method comprises at least one of: a) receiving 420, by the network device 10, a response RESP-1-POS-PROC-SL to the request REQ-POS-PROC-SL from the first terminal device 20-1, wherein for example the response characterizes an acknowledgement of the first terminal device 20-1 indicating that a1) the first terminal device 20-1 is capable of performing the at least one sidelink-based positioning procedure and/or that a2) the first terminal device 20-1 is configured to, e.g. able to, communicate directly with the second terminal device 20-2, e.g. over a sidelink interface IF-SL, e.g. a PC5 interface according to some accepted standard, b) receiving 422, by the network device 10, a response RESP-2-POS-PROC-SL to the request REQ-POS-PROC-SL from the second terminal device 20-2, wherein for example the response characterizes an acknowledgement of the second terminal device 20-2 indicating that b1) the second terminal device 20-2 is capable of performing the at least one sidelink-based positioning procedure and/or that b2) the second terminal device 20-2 is configured to, e.g. able to, communicate directly with the first terminal device 20-1, e.g. over a sidelink interface IF-SL, e.g. a PC5 interface according to some accepted standard.

Further exemplary embodiments, Fig. 2, relate to an apparatus 100, for example for a network device 10, for performing the method according to the embodiments, e.g. as defined by at least one of the claims 1 to 5 and/or exemplified based e.g. on Fig. 1 to Fig. 4.

Further exemplary embodiments, Fig. 2, relate to an apparatus 100a, for example for a network device 10, comprising means 102a for performing the method according to the embodiments, e.g. as defined by at least one of the claims 1 to 5 and/or exemplified based e.g. on Fig. 1 to Fig. 4.

In some exemplary embodiments, Fig. 2, the apparatus 100, 100a and/or its functionality may e.g. be provided within the network device 10. In some exemplary embodiments, the apparatus 100, 100a and/or its functionality may e.g. be provided outside of the network device 10, e.g. in form of a, for example separate, device, that may e.g. be at least temporarily coupled with the network device 10.

Further exemplary embodiments, Fig. 5, relate to a method, for example a computer-implemented method, comprising: receiving 450, by a terminal device 20-1, a request REQ-POS-PROC-SL instructing the terminal device 20-1 to perform at least one sidelink-based positioning procedure associated with at least one further terminal device 20-2. In some exemplary embodiments, the terminal device may e.g. be the first terminal device 20-1 and/or the second terminal device 20-2 as exemplarily mentioned above. In other words, in some exemplary embodiments, while in the following exemplary description, aspects of the terminal device according to some exemplary embodiments are, for the sake of clarity, and, without loss of generality, primarily explained with reference to the first terminal device 20-1 of Fig. 2, similar observations may also apply to the second terminal device 20-2 of Fig. 2. Thus, in some exemplary embodiments, one or more of the terminal devices 20-1, 20-2 may e.g. be configured to perform at least some aspects according to exemplary embodiments.

In some exemplary embodiments, Fig. 5, the method comprises: transmitting 452, by the terminal device 20-1, a response RESP-POS-PROC-SL to the request REQ-POS-PROC-SL, wherein for example the response RESP-POS-PROC-SL to the request characterizes an acknowledgement of the terminal device 20-1 indicating at least one of a) that the terminal device 20-1 is capable of performing the at least one sidelink-based positioning procedure, b) that the terminal device 20-1 is configured to, e.g. able to, communicate directly with another terminal device 20-2, e.g. over a sidelink interface IF-SL, e.g. a PC5 interface according to some accepted standard.

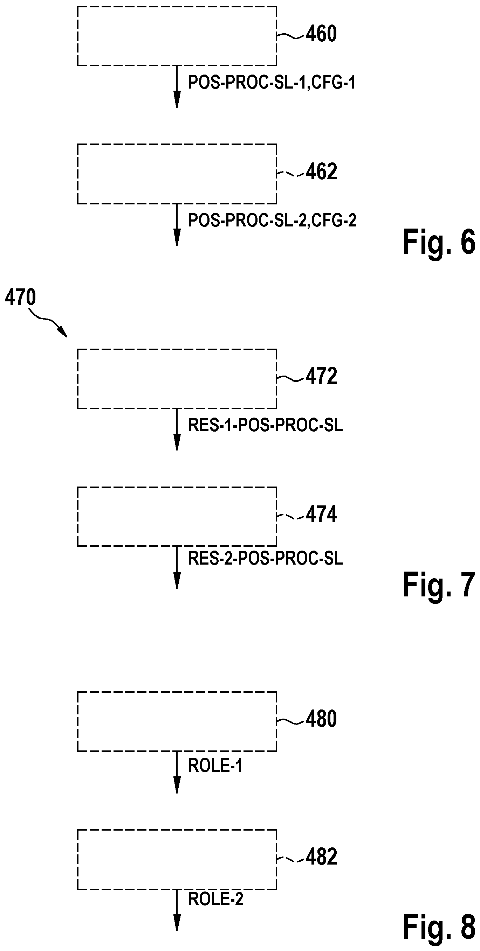

In some exemplary embodiments, Fig. 6, the method comprises at least one of: a) performing 460, by the terminal device 20-1, the at least one sidelink-based positioning procedure POS-PROC-SL-1 associated with at least one further terminal device 20-2 in a first configuration CFG-1, wherein for example the terminal device 20-1 assumes a role of a target terminal device, wherein for example at least one further terminal device 20-2 assumes a role of an anchor terminal device, b) performing 462, by the terminal device 20-1, the at least one sidelink-based positioning procedure POS-PROC-SL-2 associated with at least one further terminal device 20-2 in a second configuration CFG-2, wherein for example the terminal device 20-1 assumes a role of an anchor terminal device, wherein for example at least one further terminal device 20-2 assumes a role of a target terminal device.

In some exemplary embodiments, Fig. 7, the method comprises: transmitting 470, by the terminal device, a result of the at least one sidelink-based positioning procedure, e.g. to the network device 10, wherein for example the transmitting 470 comprises at least one of a) transmitting 472, by the terminal device 20-1, 20-2, a result RES-1-POS-PROC-SL of the at least one sidelink-based positioning procedure POS-PROC-SL-1 associated with a or the first configuration CFG-1, e.g. to the network device 10, b) transmitting 474, by the terminal device 20-1, 20-2, a result RES-2-POS-PROC-SL of the at least one sidelink-based positioning procedure POS-PROC-SL-2 associated with a or the second configuration CFG-2, e.g. to the network device 10.

In some exemplary embodiments, Fig. 8, the method comprises at least one of: a) assuming 480, for example at least temporarily, a first role ROLE-1, by the terminal device 20-1, e.g. for the at least one sidelink-based positioning procedure POS-PROC-SL-1, wherein the first role ROLE-1 is associated with a target terminal device, b) assuming 482, for example at least temporarily, a second role ROLE-2, by the terminal device 20-1, e.g. for the at least one sidelink-based positioning procedure POS-PROC-SL-2, wherein the second role ROLE-2 is associated with an anchor terminal device.

Further exemplary embodiments, Fig. 2, relate to an apparatus 200, for example for a terminal device 20-1, 20-2, for performing the method according to the embodiments, e.g. as defined by at least one of the claims 8 to 12 and/or exemplified based e.g. on Fig. 1 to Fig. 8.

Further exemplary embodiments, Fig. 2, relate to an apparatus 200a, for example for a terminal device 20-1, 20-2, comprising means 202a for performing the method according to the embodiments, e.g. as defined by at least one of the claims 8 to 12 and/or exemplified based e.g. on Fig. 1 to Fig. 8.

In some exemplary embodiments, Fig. 2, the apparatus 200, 200a and/or its functionality may e.g. be provided within at least one terminal device 20-1, 20-1. In some exemplary embodiments, the apparatus 200, 200a and/or its functionality may e.g. be provided outside of the terminal device 20-1, 20-2, e.g. in form of a, for example separate, device, that may e.g. be at least temporarily coupled with the terminal device 20-1, 20-2.

Further exemplary embodiments, Fig. 2, relate to a wireless, for example cellular, communication system or network 1000 comprising at least one apparatus 100, 100a, 200, 200a according to the embodiments. In some exemplary embodiments, the communication system or network 1000 may e.g. comprise at least one gNB 10 and/or at least one terminal device 20-1, 20-2.

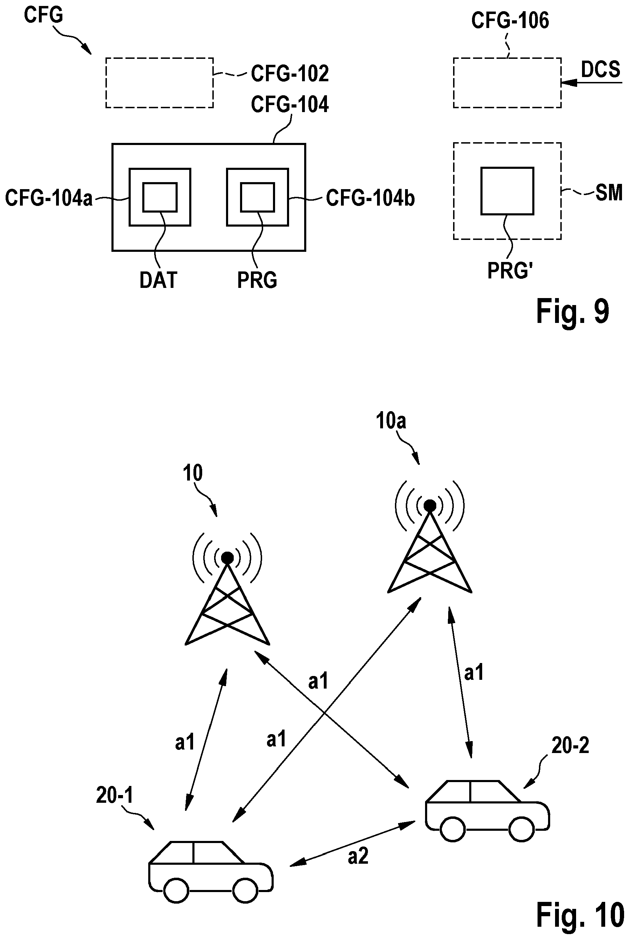

Fig. 9 schematically depicts a simplified block diagram of a configuration CFG according to further exemplary embodiments. In some exemplary embodiments, the depicted configuration CFG may e.g. be used for implementing at least one of the apparatus 100, 100a, 200, 200a according to the embodiments.

In some exemplary embodiments, the configuration CFG comprises at least one calculating unit, e.g. processor, CFG-102 and at least one memory unit CFG-104 associated with (i.e., usably by) the at least one calculating unit CFG-102, e.g. for at least temporarily storing a computer program PRG and/or data DAT, wherein the computer program PRG is e.g. configured to at least temporarily control an operation of the configuration CFG, e.g. for (e.g., within) at least one apparatus 100, 100a, 200, 200a, such as e.g. the execution of a method according to some exemplary embodiments.

In some exemplary embodiments, the at least one calculating unit CFG-102 comprises at least one core (not shown) for executing the computer program PRG or at least parts thereof, e.g. for executing the method according to the embodiments or at least one or more steps and/or other aspects thereof.

According to further exemplary embodiments, the at least one calculating unit CFG-102 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). According to further preferred embodiments, any combination of two or more of these elements is also possible.

According to further exemplary embodiments, the memory unit CFG-104 comprises at least one of the following elements: a volatile memory CFG-104a, e.g. a random-access memory (RAM), a non-volatile memory CFG-104b, e.g. a Flash-EEPROM.

In some exemplary embodiments, the computer program PRG is at least temporarily stored in the non-volatile memory CFG-104b. Data CFG-DAT (e.g. associated with the positions POS-20-1, POS-20-1 and/or with any of the procedures 400, 402, POS-PROC-SL, POS-PROC-SL-1, POS-PROC-SL-2, and the like), which may e.g. be used for executing the method according to some exemplary embodiments, may at least temporarily be stored in the RAM CFG-104a.

In some exemplary embodiments, an optional computer-readable storage medium SM comprising instructions, e.g. in the form of a further computer program PRG', may be provided, wherein the further computer program PRG', when executed by a computer, i.e. by the calculating unit CFG-102, may cause the computer CFG-102 to carry out the method according to the embodiments. As an example, the storage medium SM may comprise or represent a digital storage medium such as a semiconductor memory device (e.g., solid state drive, SSD) and/or a magnetic storage medium such as a disk or harddisk drive (HDD) and/or an optical storage medium such as a compact disc (CD) or DVD (digital versatile disc) or the like.

In some exemplary embodiments, the configuration CFG may comprise an optional data interface CFG-106, e.g. for bidirectional data exchange with an external device (not shown). As an example, by means of the data interface CFG-106, a data carrier signal DCS may be received, e.g. from the external device, for example via a wired or a wireless data transmission medium, e.g. over a (virtual) private computer network and/or a public computer network such as e.g. the Internet.

In some exemplary embodiments, the data carrier signal DCS may represent or carry the computer program PRG, PRG' according to the embodiments, or at least a part thereof.

Further exemplary embodiments relate to a computer program PRG, PRG' comprising instructions which, when the program is executed by a computer CFG-102, cause the computer CFG-102 to carry out the method according to the embodiments.

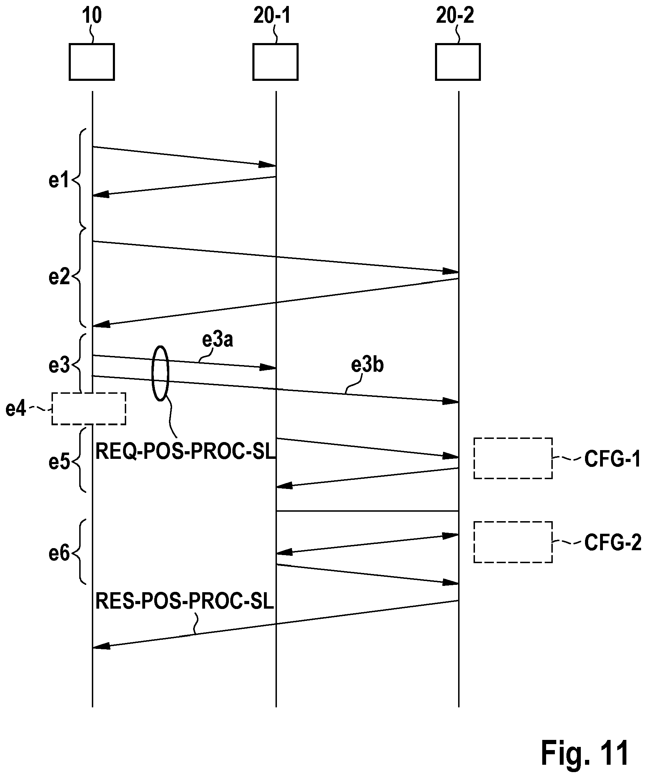

Fig. 10 schematically depicts a simplified scenario according to exemplary embodiments, depicting two gNB 10, 10a, a first terminal device 20-1 and a second terminal device 20-2, presently symbolized by vehicles. Double arrows a1 symbolize positioning reference signals, e.g. according to some accepted standard, e.g. for the Uu-based positioning, see for example blocks 400, 402 of Fig. 1. The double arrow a2 of Fig. 11 exemplarily symbolizes sidelink positioning reference signals, which, in some exemplary embodiments, may be used by at least some of the terminal devices 20a, 20b.

Fig. 11 schematically depicts a simplified signaling diagram according to exemplary embodiments, e.g. usable for the exemplary scenario of Fig. 10.

Element 10 of Fig. 11 e.g. represents one of the gNBs 10, 10a of Fig. 10, elements 20-1, 20-2 of Fig. 11 correspond with elements 20-1, 20-2 of Fig. 10.

Element e1 of Fig. 11 symbolizes a non-sidelink-based, e.g. Uu-interface based, positioning procedure associated with the first terminal device 20-1, wherein, for example, the network, e.g. via gNB 10, tries to localize the first terminal device 20-1 in a role of a first target UE, e.g. using positioning reference signals and, for example, supported positioning techniques, e.g. according to some accepted standard.

Element e2 of Fig. 11 symbolizes a non-sidelink-based, e.g. Uu-interface based, positioning procedure associated with the second terminal device 20-2, wherein, for example, the network, e.g. via gNB 10, tries to localize the second terminal device 20-2 in a role of a second target UE, e.g. using positioning reference signals and, for example, supported positioning techniques, e.g. according to some accepted standard.

Element e3 of Fig. 11 symbolizes an exemplary initiation of a sidelink positioning procedure POS-PROC-SL (also see, for example, block 404 of Fig. 1). In some exemplary embodiments, the network, e.g. via gNB 10, may e.g. want to check a relative position between the first target UE 20-1 and the second target UE 20-2, e.g. through direct communication, i.e., using sidelink positioning. In some exemplary embodiments, the gNB 10 sends a respective request e3a, e3b instructing to perform at least one sidelink-based positioning procedure e5, e6 associated with at least one of the first terminal device 20-1 and the second terminal device 20-2 to at least one of the first terminal device 20-1 (see arrow e3a of Fig. 11) and the second terminal device 20-2 (see arrow e3b of Fig. 11).

In some exemplary embodiments, the respective request e3a, e3b may e.g. be denoted as "relative positioning request" or "relative positioning verification request", as relative positioning between the terminal devices 20-1, 20-2 may be used, e.g. in the form of sidelink positioning, e.g. to obtain (e.g., at least) a relative position information associated with the terminal devices 20-1, 20-2, which may e.g. be used for verifying the positions POS-20-1, POS-20-2 (also see, for example, the procedure of Fig. 1).

In some exemplary embodiments, the respective request e3a, e3b may e.g. be acknowledged by at least one of the target UEs 20-1, 20-2 (see, for example, the blocks 420, 422 of Fig. 4), e.g. to indicate that they, e.g. both, are capable of performing sidelink positioning and are, e.g. also, able to communicate directly to each other.

In some exemplary embodiments, element e4 of Fig. 11 symbolizes the gNB 10 receiving at least one acknowledgement (not shown in Fig. 11, see, for example, blocks 420, 422 of Fig. 4) to the respective request e3a, e3b from at least one of the target UEs 20-1, 20-2.

In some exemplary embodiments, element e5 of Fig. 11 symbolizes a first sidelink-based positioning procedure, e.g. in a first configuration CFG-1, wherein, for example, the first terminal device 20-1 assumes the role of a target UE, and wherein, for example, the second terminal device 20-2 assumes the role of an anchor UE.

In some exemplary embodiments, element e6 of Fig. 11 symbolizes a second sidelink-based positioning procedure, e.g. in a second configuration CFG-2, wherein, for example, the second terminal device 20-2 assumes the role of the target UE, and wherein, for example, the first terminal device 20-1 assumes the role of the anchor UE.

In some exemplary embodiments, the arrow RES-POS-PROC-SL collectively denotes at least one result of at least one of the sidelink-based positioning procedures e5, e6, which at least one result may e.g. comprise relative position information characterizing at least one relative position, e.g. of the first terminal device 20-1 with respect to the second terminal device 20-2.

In some exemplary embodiments, at least one of the terminal devices 20-1, 20-2, for example both terminal devices 20-1, 20-2, may report corresponding result(s) RES-POS-PROC-SL of at least one of the sidelink-based positioning procedures e5, e6 to the gNB 10, see, for example, also Fig. 7.

While Fig. 11 exemplarily depicts two terminal devices 20-1, 20-2 and one gNB 10, for the sake of clarity, in some exemplary embodiments, more than the two terminal devices 20-1, 20-2 and/or more than one gNB 10 may be provided.

In some exemplary embodiments, the principle according to the embodiments may e.g. be employed for verifying a position, for example a relative position, of two terminal devices 20-1, 20-2. As an example, at least one of the two terminal devices may e.g. be a mobile device and/or associated with a mobile device such as a vehicle, seen for example, Fig. 10.

In some exemplary embodiments, at least one of the gNB 10, 10a of Fig. 10 may determine the position POS-20-1, POS-20-2 using a non-sidelink based positioning procedure, such as e.g. Uu-based positioning. In some exemplary embodiments, e.g. based on the so determined positions POS-20-1, POS-20-2, the at least one of the gNB 10, 10a may determine to verify the positions POS-20-1, POS-20-2, e.g. using a further positioning procedure, such as e.g. at least one sidelink-based positioning procedure POS-PROC-SL, POS-PROC-SL-1, POS-PROC-SL-2, e5, e6 according to some exemplary embodiments, e.g. to obtain more precise position information related to the terminal devices 20-1, 20-2.

In some exemplary embodiments, the abovementioned procedure may, for example, be used when the gNB 10, 10a determines a potential danger, e.g. caused by a potential collision, e.g. indicated by a difference of the positions POS-20-1, POS-20-2 decreasing below a predetermined safety threshold, e.g. within a predetermined time interval. In such cases, e.g. for obtaining even more precise position information related to the terminal devices 20-1, 20-2, a procedure according to the embodiments, see for example blocks 404, 406, may be performed, whereby e.g. the determined positions POS-20-1, POS-20-2 may be verified and/or the difference of the determined positions POS-20-1, POS-20-2 may be refined, e.g. for confirming whether there is a risk of collision of the terminal devices 20-1, 20-2 or, for example, vehicles associated with the terminal devices 20-1, 20-2. In some exemplary embodiments, this exemplary procedure may e.g. be used for collision avoidance of mobile terminal devices 20-1, 20-2.

In some exemplary embodiments, information exchanged between the gNB 10 and at least one of the terminal devices 20-1, 20-2 and/or exchanged between the terminal devices 20-1, 20-2 may e.g. be transmitted using at least one of: a) level 1 (L1) signaling, b) level 2 (L2) signaling.

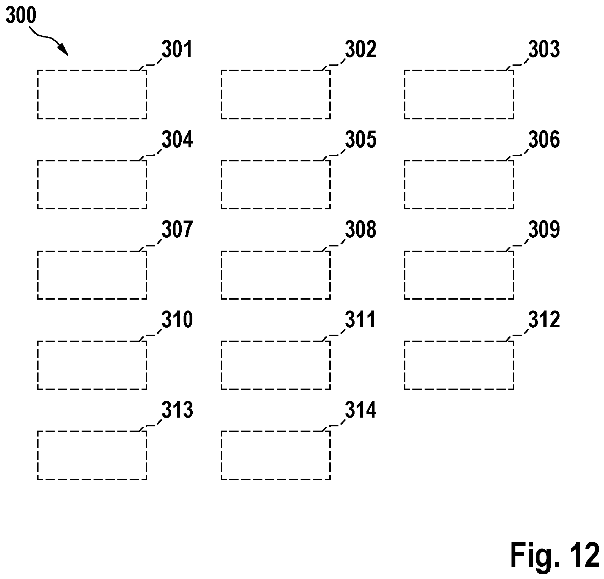

Further exemplary embodiments, Fig. 12, relate to a use 300 of the method according to the embodiments and/or of the apparatus 100, 100a, 200, 200a according to the embodiments and/or of the communication system 1000 according to the embodiments and/or of the computer program PRG, PRG' according to the embodiments, and/or of a computer-readable storage medium SM according to the embodiments and/or of a data carrier signal DCS according to the embodiments for at least one of: a) performing 301 at least one sidelink-based positioning procedure, b) assisting 302 a network device in performing at least one positioning procedure, c) validating 303 at least one positioning procedure associated with a network device, e.g. based on the at least one sidelink-based positioning procedure, d) increasing 304 a precision of at least one positioning procedure associated with a network device, e.g. based on the at least one sidelink-based positioning procedure, e) performing 305 hybrid positioning (e.g., using aspects of sidelink-based positioning and non-sidelink based positioning, e.g. Uu-interface-based positioning) associated with at least one network device and at least one terminal device, f) employing 306 sidelink ranging capabilities of at least one terminal device, e.g. for positioning, g) increasing 307 a flexibility of hybrid positioning associated with at least one network device and at least one terminal device, h) performing 308 on-demand sidelink-based positioning, e.g. upon request of at least one network device, e.g. for verifying the position of the first terminal device and/or the position of the second terminal device, i) providing 309 positioning capabilities to communications networks 1000, e.g. associated with car-to-car communication and/or communication of Industrial Internet of Things, lIoT, device and/or vehicle-to-X, V2X, communication, j) assigning 310, for example dynamically, e.g. during operation, assigning, different roles associated with the at least one sidelink-based positioning procedure to at least one of the first terminal device and the second terminal device, k) collision warning 311 associated with at least one mobile object, e.g. mobile terminal device 20-1, 20-2, I) collision avoidance 312 associated with at least one mobile object, e.g. mobile terminal device 20-1, 20-2, m) collision prevention 313 associated with at least one mobile object, e.g. mobile terminal device 20-1, 20-2, n) modifying 314 a movement, e.g. trajectory, of at least one mobile object, e.g. mobile terminal device 20-1, 20-2.

In some exemplary embodiments, the principle according to the embodiments may e.g. be used by the network 1000, e.g. via gNB 10, e.g. to verify a Uu-based positioning, e.g. by utilizing sidelink positioning anchor UEs and respective sidelink ranging capabilities.

In some exemplary embodiments, e.g. assuming that Uu-based positioning was performed successfully for multiple UEs individually (see, for example, blocks 400, 402 of Fig. 1), the network 1000, e.g. via gNB 10, may request to verify an absolute and/or relative position of at least one of the UEs 20-1, 20-2, e.g. via SL positioning.

In some exemplary embodiments, as the network e.g. performs individual measurements related to the UE, a positioning error might add up, e.g. if a relative position between UEs 20-1, 20-2 is of interest. In this case, in some exemplary embodiments, at least one SL positioning procedure POS-PROC-SL, POS-PROC-SL-1, POS-PROC-SL-2, e5, e6 may be performed between the UEs of interest, e.g. for the network 1000. In other words, in some exemplary embodiments, the principle according to the embodiments may e.g. be used to calibrate Uu-based positions POS-20-1, POS-20-2, e.g. by the gNB 10, e.g. per an on-demand basis.

## Claims

1. A method, for example a computer-implemented method, comprising: determining (400), by a network device (10; 10a), a position (POS-20-1) of a first terminal device (20-1), determining (402), by the network device (10; 10a), a position (POS-20-2) of a second terminal device (20-2), and initiating (404), by the network device (10; 10a), at least one sidelink-based positioning procedure (POS-PROC-SL) associated with at least one of the first terminal device (20-1) and the second terminal device (20-2).

2. The method according to claim 1, wherein at least one of a) determining (400) the position (POS-20-1) of the first terminal device (20-1), b) determining (402) the position (POS-20-2) of the second terminal device (20-2), comprises at least one of: A) performing (400a, 402a) a positioning procedure (POS-PROC-1), for example based on an air interface, e.g. Uu interface, between the network device (10; 10a) and at least one of the first terminal device (20-1) and the second terminal device (20-2), B) receiving (400b, 402b) at least one of the position (POS-20-1) of the first terminal device (20-1) and the position (POS-20-2) of the second terminal device (20-2), e.g. from a further entity (30), wherein for example at least one of a) determining (400) the position (POS-20-1) of the first terminal device (20-1), b) determining (402) the position (POS-20-2) of the second terminal device (20-2) uses another positioning procedure (POS-PROC-1) than a sidelink-based positioning procedure (POS-PROC-SL) associated with at least one of the first terminal device (20-1) and the second terminal device (20-2).

3. The method according to any of the preceding claims, comprising evaluating (406), by the network device (10; 10a), at least one of the position (POS-20-1) of the first terminal device (20-1) and the position (POS-20-2) of the second terminal device (20-2) with respect to a result (RES-POS-PROC-SL) of the at least one sidelink-based positioning procedure (POS-PROC-SL), wherein for example the evaluating (406) comprises verifying (406a) at least one of the position (POS-20-1) of the first terminal device (20-1) and the position (POS-20-2) of the second terminal device (20-2) based on the result (RES-POS-PROC-SL) of the at least one sidelink-based positioning procedure (POS-PROC-SL).

4. The method according to any of the preceding claims, comprising at least one of: a) transmitting (410; e3), by the network device (10; 10a), a request (REQ-POS-PROC-SL) instructing to perform at least one sidelink-based positioning procedure (POS-PROC-SL) associated with at least one of the first terminal device (20-1) and the second terminal device (20-2) to at least one of the first terminal device (20-1) and the second terminal device (20-2), b) receiving (412; e4), by the network device (10; 10a), a response (RESP-POS-PROC-SL) to the request (REQ-POS-PROC-SL) from at least one of the first terminal device (20-1) and the second terminal device (20-2), wherein for example the response (RESP-POS-PROC-SL) to the request (REQ-POS-PROC-SL) characterizes an acknowledgement of at least one of the first terminal device (20-1) and the second terminal device (20-2) indicating b1) that the respective terminal device (20-1, 20-2) is capable of performing the at least one sidelink-based positioning procedure (POS-PROC-SL) and/or b2) that the first terminal device (20-1) and the second terminal device (20-2) are configured to, e.g. able to, communicate directly with each other, e.g. over a sidelink interface, e.g. a PC5 interface according to some accepted standard.

5. The method according to claim 4, comprising at least one of: a) receiving (420), by the network device (10; 10a), a response (RESP-1-POS-PROC-SL) to the request (REQ-POS-PROC-SL) from the first terminal device (20-1), wherein for example the response (RESP-1-POS-PROC-SL) characterizes an acknowledgement of the first terminal device (20-1) indicating that a1) the first terminal device (20-1) is capable of performing the at least one sidelink-based positioning procedure (POS-PROC-SL) and/or that a2) the first terminal device (20-1) is configured to, e.g. able to, communicate directly with the second terminal device (20-2), e.g. over a sidelink interface (IF-SL), e.g. a PC5 interface according to some accepted standard, b) receiving (422), by the network device (10; 10a), a response (RESP-2-POS-PROC-SL) to the request (REQ-POS-PROC-SL) from the second terminal device (20-2), wherein for example the response (RESP-2-POS-PROC-SL) characterizes an acknowledgement of the second terminal device (20-2) indicating that b1) the second terminal device (20-2) is capable of performing the at least one sidelink-based positioning procedure (POS-PROC-SL) and/or that b2) the second terminal device (20-2) is configured to, e.g. able to, communicate directly with the first terminal device (20-1), e.g. over a sidelink interface (IF-SL), e.g. a PC5 interface according to some accepted standard.

6. An apparatus (100), for example for a network device (10, 10a), for performing the method according to at least one of the preceding claims.

7. An apparatus (100a), for example for a network device (10, 10a), comprising means (102a) for performing the method according to at least one of the preceding claims.

8. A method, for example a computer-implemented method, comprising: receiving (450), by a terminal device (20-1, 20-2), a request (REQ-POS-PROC-SL; e3a, e3b) instructing the terminal device (20-1, 20-2) to perform at least one sidelink-based positioning procedure (POS-PROC-SL) associated with at least one further terminal device (20-2, 20-1).

9. The method according to claim 8, comprising: transmitting (452), by the terminal device (20-1, 20-2), a response (RESP-POS-PROC-SL; RESP-1-POS-PROC-SL, RESP-2-POS-PROC-SL) to the request (REQ-POS-PROC-SL), wherein for example the response (RESP-POS-PROC-SL; RESP-1-POS-PROC-SL, RESP-2-POS-PROC-SL) to the request (REQ-POS-PROC-SL) characterizes an acknowledgement of the terminal device (20-1, 20-2) indicating at least one of a) that the terminal device (20-1, 20-2) is capable of performing the at least one sidelink-based positioning procedure (POS-PROC-SL), b) that the terminal device (20-1, 20-2) is configured to, e.g. able to, communicate directly with another terminal device (20-2, 20-1), e.g. over a sidelink interface (IF-SL), e.g. a PC5 interface according to some accepted standard.

10. The method according to any of the claims 8 to 9, comprising at least one of: a) performing (460), by the terminal device (20-1, 20-2), the at least one sidelink-based positioning procedure (POS-PROC-SL; POS-PROC-SL-1) associated with at least one further terminal device (20-2, 20-1) in a first configuration (CFG-1), wherein for example the terminal device (20-1, 20-2) assumes a role of a target terminal device, wherein for example at least one further terminal device (20-2, 20-1) assumes a role of an anchor terminal device, b) performing (462), by the terminal device (20-1, 20-2), the at least one sidelink-based positioning procedure (POS-PROC-SL; POS-PROC-SL-2) associated with at least one further terminal device (20-2, 20-1) in a second configuration (CFG-2), wherein for example the terminal device (20-1, 20-2) assumes a role of an anchor terminal device, wherein for example at least one further terminal device (20-2, 20-1) assumes a role of a target terminal device.

11. The method according to any of the claims 8 to 10, comprising: transmitting (470), by the terminal device (20-1, 20-2), a result (RES-POS-PROC-SL) of the at least one sidelink-based positioning procedure (POS-PROC-SL), e.g. to the network device (10), wherein for example the transmitting (470) comprises at least one of a) transmitting (472), by the terminal device (20-1, 20-2), a result (RES-1-POS-PROC-SL) of the at least one sidelink-based positioning procedure (POS-PROC-SL-1) associated with a or the first configuration (CFG-1), e.g. to the network device (10), b) transmitting (474), by the terminal device (20-1, 20-2), a result (RES-2-POS-PROC-SL) of the at least one sidelink-based positioning procedure (POS-PROC-SL-2) associated with a or the second configuration (CFG-2), e.g. to the network device (10).

12. The method according to any of the claims 8 to 11, comprising at least one of: a) assuming (480), for example at least temporarily, a first role (ROLE-1), by the terminal device (20-1, 20-2), e.g. for the at least one sidelink-based positioning procedure (POS-PROC-SL-1), wherein the first role (ROLE-1) is associated with a target terminal device, b) assuming (482), for example at least temporarily, a second role (ROLE-2), by the terminal device (20-1, 20-2), e.g. for the at least one sidelink-based positioning procedure (POS-PROC-SL-2), wherein the second role (ROLE-2) is associated with an anchor terminal device.

13. An apparatus (200), for example for a terminal device (20-1, 20-2), for performing the method according to at least one of the claims 8 to 12.

14. An apparatus (200a), for example for a terminal device (20-1, 20-2), comprising means (202a) for performing the method according to at least one of the claims 8 to 12.

15. A communication system (1000) comprising at least one apparatus (100; 100a; 200; 200a) according to any of the claims 6, 7, 13, 14.

16. A use (300) of the method according to at least one of the claims 1 to 5 and/or 8 to 12 and/or of the apparatus (100; 100a; 200; 200a) according to any of the claims 6, 7, 13, 14 and/or of the communication system (1000) according to claim 15 and/or of a computer program (PRG; PRG') comprising instructions which, when the program (PRG; PRG') is executed by a computer (CFG-102), cause the computer (CFG-102) to carry out the method according to at least one of the claims 1 to 5, 8 to 12, and/or of a computer-readable storage medium (SM) comprising instructions (PRG') which, when executed by a computer (CFG-102), cause the computer (CFG-102) to carry out the method according to at least one of the claims 1 to 5, 8 to 12 and/or of a data carrier signal (DCS) carrying and/or characterizing a computer program (PRG; PRG') comprising instructions which, when the program (PRG; PRG') is executed by a computer (CFG-102), cause the computer (CFG-102) to carry out the method according to at least one of the claims 1 to 5, 8 to 12 for at least one of: a) performing (301) at least one sidelink-based positioning procedure (POS-PROC-SL, POS-PROC-SL-1, POS-PROC-SL-2), b) assisting (302) a network device (10, 10a) in performing at least one positioning procedure (POS-PROC-1), c) validating (303) at least one positioning procedure (POS-PROC-1) associated with a network device (10, 10a), e.g. based on the at least one sidelink-based positioning procedure (POS-PROC-SL, POS-PROC-SL-1, POS-PROC-SL-2), d) increasing (304) a precision of at least one positioning procedure (POS-PROC-1) associated with a network device (10, 10a), e.g. based on the at least one sidelink-based positioning procedure (POS-PROC-SL, POS-PROC-SL-1, POS-PROC-SL-2), e) performing (305) hybrid positioning associated with at least one network device (10, 10a) and at least one terminal device (20-1, 20-2), f) employing (306) sidelink ranging capabilities of at least one terminal device (20-1, 20-2), e.g. for positioning, g) increasing (307) a flexibility of hybrid positioning associated with at least one network device (10, 10a) and at least one terminal device (20-1, 20-2), h) performing (308) on-demand sidelink-based positioning, e.g. upon request of at least one network device (10, 10a), e.g. for verifying the position (POS-20-1) of the first terminal device (20-1) and/or the position (POS-20-2) of the second terminal device (20-2), i) providing (309) positioning capabilities to communications networks (1000), e.g. associated with car-to-car communication and/or communication of Industrial Internet of Things, lIoT, device and/or vehicle-to-X, V2X, communication, j) assigning (310), for example dynamically, e.g. during operation, assigning, different roles (ROLE-1, ROLE-2) associated with the at least one sidelink-based positioning procedure (POS-PROC-SL, POS-PROC-SL-1, POS-PROC-SL-2) to at least one of the first terminal device (20-1) and the second terminal device (20-2), k) collision warning (311) associated with at least one mobile object, e.g. mobile terminal device (20-1, 20-2), I) collision avoidance (312) associated with at least one mobile object, e.g. mobile terminal device (20-1, 20-2), m) collision prevention (313) associated with at least one mobile object, e.g. mobile terminal device (20-1, 20-2), n) modifying (314) a movement, e.g. trajectory, of at least one mobile object, e.g. mobile terminal device (20-1, 20-2).
